# FASCICULE DE BREVET EUROPEEN

(11) **EP 1 262 868 B1**
(45) Date de publication et mention de la délivrance du brevet: **18.07.2007**
(21) Numéro de dépôt: 02291320.6
(22) Date de dépôt: 30.05.2002
(51) Int. Cl.: G06F 9/44

(54) **Procédé et équipements de production de logiciel**
Verfahren und Vorrichtung zur Rechnerprogrammerzeugung
Method and system for software production

(30) Priorité: 01.06.2001 FR 0107220
(43) Date de publication de la demande: 04.12.2002
(73) Titulaire: Alliance pour les Technologies de l'Informatique, ALITEC, 53000 Laval (FR)
(72) Inventeur: Martin, Jean-Noel, 53970 l'Huisserie (FR); Le Guen, Hélène, 53000 Laval (FR)
(74) Mandataire: Laget, Jean-Loup

(56) Documents cités:
- EP-A- 0 343 682
- EP-A- 0 528 237
- PATENT ABSTRACTS OF JAPAN vol. 014, no. 516 (P-1130), 13 novembre 1990 (1990-11-13) & JP 02 216547 A (CHUGOKU NIPPON DENKI SOFTWARE KK), 29 août 1990 (1990-08-29)
- PATENT ABSTRACTS OF JAPAN vol. 014, no. 525 (P-1132), 19 novembre 1990 (1990-11-19) & JP 02 220146 A (TOSHIBA CORP), 3 septembre 1990 (1990-09-03)

## Description

La présente invention concerne de manière générale le domaine de la production et de la qualification des logiciels.

Plus particulièrement, la présente invention concerne un procédé et des équipements permettant une production partiellement automatisée des logiciels et leur qualification exhaustive.

De tels procédés et équipements sont décrits en particulier dans EP-A-0 343 682, EP-A-0 528 237, JP-A-2216547 et JP-A-2220146.

Les processus de production des logiciels dans les domaines où la sûreté de fonctionnement est critique sont extrêmement lourds. Ces domaines sont par exemple ceux de l'avionique civile, du médical, du nucléaire, et autres. Un certain nombre de garanties doivent être apportées aux organismes de certification, et de nombreuses contraintes sont associées aux processus de développement des logiciels. Pour l'avionique civile, par exemple, ces contraintes ont été rassemblées dans la norme référencée DO178B.

Le coût de la production de tels logiciels peut donc être très élevé. De plus, la complexité de ces logiciels et les nombreux problèmes à résoudre en cours de développement fait qu'il est souvent difficile de tenir les délais. Afin palier à ces inconvénients, il est souhaitable d'avancer dans la voie de l'automatisation.

La qualification des logiciels demande que ceux-ci passent un certain nombre de tests. Le but des tests est de vérifier que l'implémentation vérifie les exigences de la spécification, ou de détecter des différences entre elles. Classiquement, un modèle de validation est construit, et des jeux de tests sont établis pour tester le logiciel sur le plan de son fonctionnement, de ses performances ou de sa robustesse. Si les performances des logiciels peuvent généralement être vérifiées sans trop de difficultés, leur robustesse et leur fonctionnement sont plus difficiles à tester. Par exemple, un test fonctionnel exhaustif de tous les comportements d'un logiciel est souvent impossible, car le nombre de cas est trop élevé ou infini. Le problème du test est donc un problème de couverture. Il faut sélectionner les cas de test qui assurent la meilleure couverture du logiciel. Des techniques de partitionnement et de construction de classes d'équivalence ont été mises au point, et permettent de traiter de manière relativement satisfaisante la couverture fonctionnelle. Par contre, le problème de la couverture structurelle du logiciel par les tests est actuellement moins bien maîtrisé. Il faut ici garantir la couverture par les tests de la structure du logiciel, à savoir, des différents tronçons de code, et une traçabilité exhaustive est nécessaire. Il est donc souhaitable, compte-tenu des contraintes croissantes de la normalisation, d'apporter des solutions autorisant une meilleure maîtrise de la couverture structurelle.

L'invention a donc pour but d'apporter des réponses aux besoins indiqués ci-dessus, en fournissant un procédé et des équipements pour produire de manière partiellement automatisée des logiciels autorisant des tests avec une maîtrise de la couverture fonctionnelle et de la couverture structurelle des logiciels par les tests.

Le procédé selon l'invention comprend:
une étape de génération de code pour générer des blocs de code à partir d'un document de spécification d'un logiciel à produire;
une étape de traçabilité dans laquelle un partitionnement est effectué et des classes d'équivalence sont construites; et
une étape de test et validation pour tester un logiciel produit comprenant lesdits blocs de code, avec lesdites couvertures fonctionnelle et structurelle, et procéder à sa validation; et est caractérisé en ce que
ladite étape de génération de code fait appel à un processus de raffinement pour produire de manière récursive lesdits blocs de code sur la base d'une analyse des différentes sorties possibles d'un bloc de code fonctionnel et des conditions discriminantes sur les fonctions identifiées, conditions nécessaires et suffisantes pour que le code soit une solution complète et minimale aux spécifications définies par le document de spécification.

Un équipement selon l'invention comprend:
des moyens pour générer des blocs de code à partir d'un document de spécification d'un logiciel à produire;
des moyens de traçabilité dans lesquels un partitionnement est effectué et des classes d'équivalence sont construites; et
des moyens pour tester un logiciel produit comprenant lesdits blocs de code, avec lesdites couvertures fonctionnelle et structurelle, et procéder à sa validation; et est caractérisé en ce que
lesdits moyens pour générer des blocs de code font appel à un processus de raffinement pour produire de manière récursive lesdits blocs de code sur la base d'une analyse des différentes sorties possibles d'un bloc de code fonctionnel et des conditions discriminantes sur les fonctions identifiées, conditions nécessaires et suffisantes pour que le code soit une solution complète et minimale aux
spécifications définies par le document de spécification.

Différentes caractéristiques préférées du procédé et des équipements selon l'invention sont décrites dans les revendications dépendantes en annexe.

Le procédé et les équipements selon l'invention présentent l'avantage de permettre une qualification exhaustive des logiciels produits, pour un coût se situant un ordre de grandeur au-delà de l'état de l'art.

Le procédé et les équipements selon l'invention sont particulièrement bien adaptés pour produire des logiciels devant satisfaire à la norme DO178B

D'autres caractéristiques et avantages de l'invention apparaîtront à la lecture de la description suivante de différents modes de réalisation du procédé et des équipements selon l'invention, en référence aux dessins annexés correspondants, dans lesquels:
La Fig.1 est un bloc-diagramme montrant de manière simplifiée trois grandes étapes du procédé de production de logiciel selon l'invention;
la Fig.2 est un bloc-diagramme montrant une étape de génération de code du procédé selon l'invention;
la Fig.3 est un algorithme de génération de code du procédé selon l'invention;
la Fig.4 est un bloc-diagramme montrant une étape de traçabilité du procédé selon l'invention;
les Figs.5A et 5B montrent différents domaines de valeurs définis pour des variables internes du logiciel;
la Fig.6 montre un exemple de construction de classes d'équivalence pour une procédure de détermination de caractéristiques de triangles;
la Fig.7 montre un bloc d'un algorithme de traçabilité selon l'invention, relatif à la construction de classes d'équivalence;
la Fig.8 est un bloc-diagramme montrant une étape de test et validation du procédé selon l'invention;
la Fig.9 montre un exemple d'un modèle comportemental de validation; et
la Fig.10 montre un algorithme de traçabilité selon l'invention entre des transactions fonctionnelles du modèle de validation et des tronçons de code.

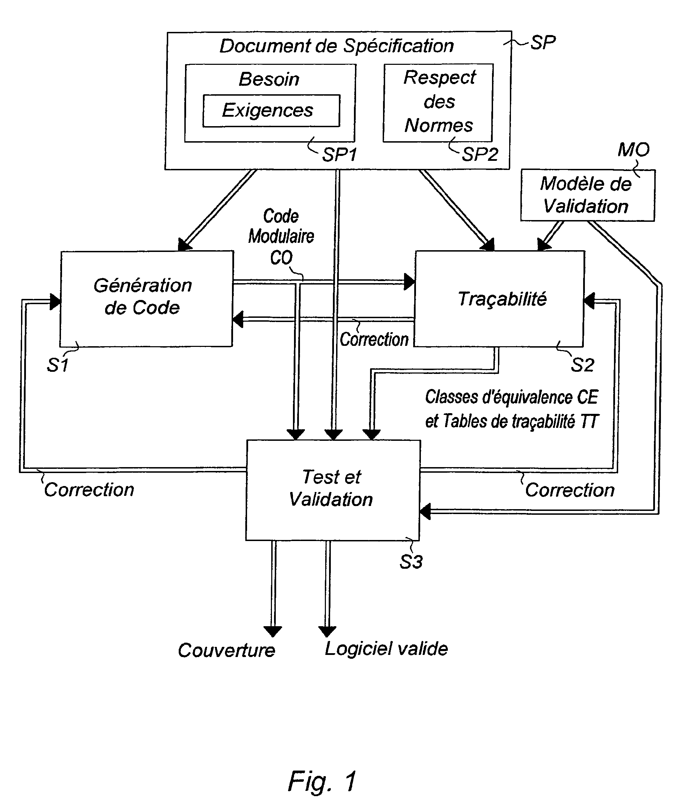

En référence à la Fig.1, le procédé de production de logiciel selon la présente invention comprend trois étapes principales: une étape de génération de code S1, une étape de traçabilité S2 et une étape de test et validation S3.

Les étapes S1, S2 et S3 doivent satisfaire à un besoin et des exigences SP1, ainsi qu'à certaines normes SP2, définis par un document de spécification SP.

De manière simplifiée, l'étape de génération de code S1 produit un code modulaire CO à partir du document de spécification SP. Ce code modulaire CO, ainsi que le document de spécification SP et un modèle comportemental de validation MO, sont ensuite utilisés par l'étape de traçabilité S2 pour construire un certain nombre de classes d'équivalence CE et de tables de traçabilité TT. De manière classique, le modèle de validation MO est construit à partir du document de spécification SP et est utilisé essentiellement dans une phase de validation du logiciel. Cependant, dans la présente invention, il existe un couplage entre le modèle de validation et la structure du code modulaire CO, de sorte que cela permet une traçabilité et un calcul de la couverture structurelle des tests dans l'étape de test et validation S3. L'étape de test et validation S3 a essentiellement pour fonction de tester le code modulaire CO produit dans l'étape de génération de code S1 et de le valider en tant que logiciel valide répondant à toutes les spécifications du document SP. Dans l'étape S3, le code modulaire CO est testé avec des jeux de tests produits à partir du modèle de validation MO et du document de spécification SP. Ces jeux de tests sont construits notamment afin de valider le code modulaire CO relativement à des couvertures fonctionnelle et structurelle définies par le document de spécification SP. L'étape S3 utilisent les classes d'équivalence CE et les tables de traçabilité TT afin de déterminer notamment la couverture effective des tests.

Bien entendu, de manière évidente pour les hommes du métier, le procédé de production de logiciel selon l'invention, présenté ci-dessus de manière simplifiée et linéaire, peut en pratique être mis en oeuvre avec un certain nombre d'étapes S1, S2 et S3, et autant de retours en arrière que nécessaire sont possibles afin par exemple d'effectuer des corrections et modifications et de produire un logiciel valide.

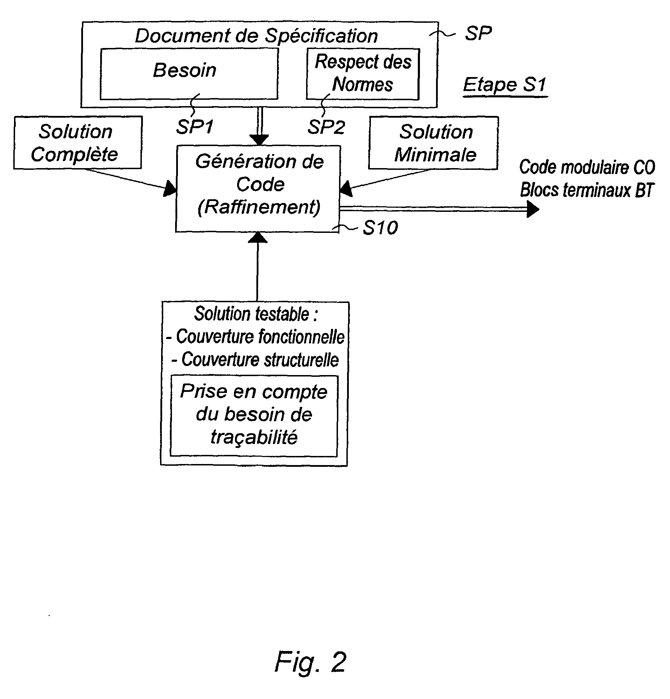

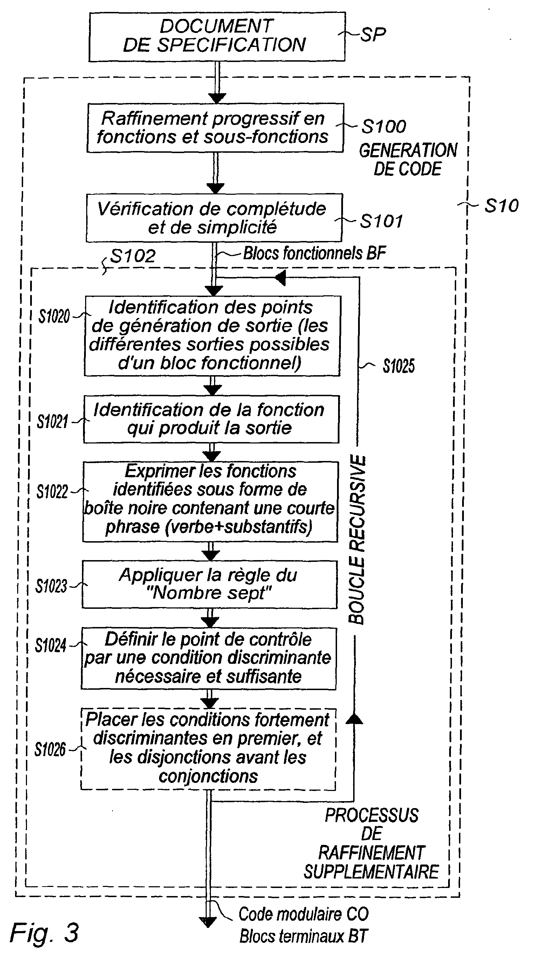

En référence aux Figs.2 et 3, il est maintenant décrit plus particulièrement l'étape de génération de code S1.

Comme montré à la Fig.2, l'étape de génération de code S1 fait appel à un algorithme de génération de code S10 mettant en oeuvre un principe de raffinement. Le code modulaire CO produit doit être une solution complète et minimale aux spécifications définies par le document de spécification SP. Comme cela apparaîtra plus clairement par la suite, le raffinement selon l'invention permet l'obtention d'une solution testable avec une maîtrise de la couverture fonctionnelle et de la couverture structurelle, en générant un code modulaire CO composé de blocs de code terminaux BT dont la traçabilité est assurée de manière exhaustive par rapport aux exigences du document de spécification SP.

Comme montré à la Fig.3, l'algorithme de génération de code S10 comprend un processus de raffinement progressif en fonctions et sous-fonctions S100, une étape de vérification de complétude et de simplicité S101, et un processus de raffinement supplémentaire S102.

Le processus S100 est connu dans l'état de la technique et permet le passage du besoin fonctionnel à une implémentation structurelle par un raffinement progressif des fonctions en sous-fonctions. Cette technique permet l'obtention d'un code modulaire dans lequel la correspondance entre fonctionnalité et structure du code réalise une traçabilité exhaustive.

L'étape S101 permet à ce stade d'obtenir, en sortie du processus S100, des blocs de code fonctionnels BF dont la complétude et la simplicité sont vérifiées.

Le processus de raffinement supplémentaire S102 est une caractéristique importante de la présente invention. Le processus S102 autorise la génération de structures de code sur la base d'une analyse des sorties et des conditions discriminantes.

Le processus de raffinement supplémentaire S102 est un processus récursif qui comprend des étapes successives S1020 à S1024, essentielles à l'invention, une boucle récursive S1025, et une étape S1026, montrée en trait interrompu, qui n'est pas indispensable, mais qu'il est possible d'ajouter afin d'améliorer la qualité du code.

L'étape S1020 est prévue pour identifier des points de génération de sortie, à savoir, les différentes sorties possibles d'un bloc de code fonctionnel BF. Chaque sortie obtenue à l'étape S1020 est transmise à l'étape S1021 qui identifie une fonction produisant ladite sortie. L'étape S1022 vient immédiatement après l'étape S1021 et consiste à exprimer les différentes fonctions identifiées par l'étape S1021 sous la forme de boîtes noires contenant chacune une courte phrase composée d'un verbe et de substantifs. L'étape suivante S1023 a pour but d'éviter une trop grande complexité des chaînes fonctionnelles obtenues, par une application de la règle du nombre sept, en limitant à 7 au maximum le nombre de sous-fonctionnalités d'une entité fonctionnelle (règle du nombre sept: L'esprit humain ne peut pas maîtriser plus de 7 idées à la fois, il ne convient donc pas de séparer une entité fonctionnelle en plus de 7 sous-fonctionnalités). L'étape S1024 vient immédiatement après l'étape S1023 et achève le processus en définissant un point de contrôle par une condition discriminante nécessaire et suffisante.

Comme indiqué ci-dessus, l'étape S1026 est optionnelle et peut être insérée en complément afin d'améliorer la qualité du code produit. L'étape S1026 consiste à placer les conditions fortement discriminantes en premier, et les disjonctions avant les conjonctions.

La boucle récursive S1025 réintroduit en entrée, au niveau de l'étape S1020, le code obtenu en sortie de l'étape S1024 ou S1026, jusqu'à la production du code modulaire CO avec le niveau de raffinement correct, composé de blocs de code terminaux BT qui sont les derniers blocs de raffinement produits par le processus de raffinement supplémentaire S102. Le code modulaire CO est ainsi produit de manière quasi-automatique.

Les blocs de code terminaux BT contiennent un code séquentiel, et chaque bloc de code terminal est défini par ses interfaces (entrées et sorties) et sa fonctionnalité.

A la fin de l'étape de génération de code S1, on a donc une traçabilité entre les blocs de code terminaux BT et les exigences. De plus, l'algorithme de génération de code S10 selon l'invention garantit une grande sécurité, car d'une part, l'approche par les sorties réduit la taille du code et l'optimise, et, d'autre part, la traçabilité est assurée.

Bien entendu, des outils d'aide à la génération de code peuvent être mis en oeuvre par les ingénieurs de développement pendant l'étape de génération de code S1.

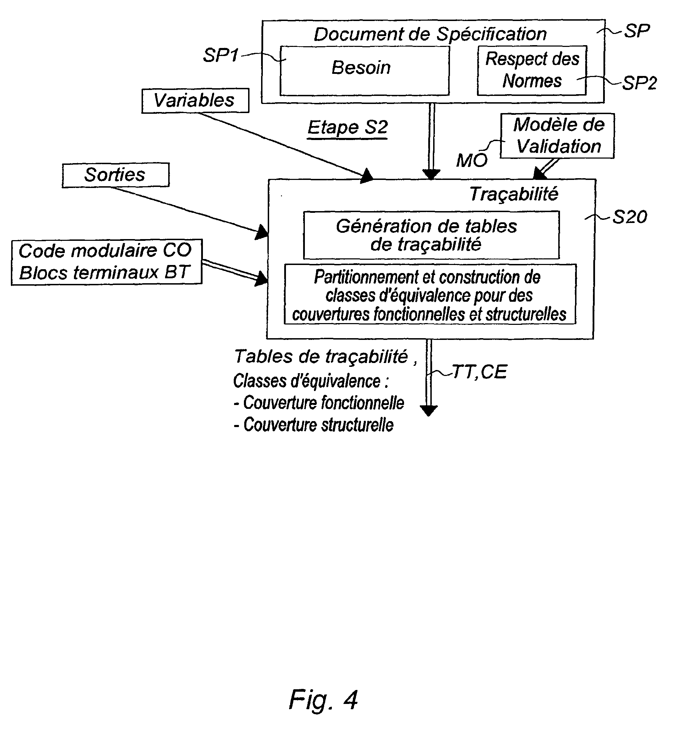

En référence aux Figs.4, 5A et 5B, 6 et 7, il est maintenant décrit plus particulièrement l'étape de traçabilité S2.

Comme montré à la Fig.4, l'étape de traçabilité S2 fait appel à un algorithme de traçabilité S20. L'algorithme S20 génère des tables de traçabilité TT, et assure le partitionnement et la construction de classes d'équivalence CE pour la couverture fonctionnelle et pour la couverture structurelle du logiciel par les tests.

Le partitionnement et la construction de classes d'équivalence sont des domaines bien connus des hommes du métier et sont très utilisés dans le test des logiciels. Ces techniques sont intéressantes pour guider la génération des cas de test et pour définir des objectifs de couverture, en général d'ordre fonctionnel dans l'état de la technique. La description de l'algorithme de traçabilité S20 selon l'invention se focalisera donc plus particulièrement sur les éclairages nouveaux qu'apportent l'invention et des caractéristiques particulières de celle-ci, à savoir, les aspects relatifs à la maîtrise de la couverture structurelle.

L'algorithme de traçabilité S20 repose sur le principe même de l'algorithme de génération de code S10 décrit plus haut. Le but recherché par l'algorithme de traçabilité S20 est autant d'associer une exigence à un tronçon d'un bloc de code terminal que de déterminer à quelle exigence se rapporte un tronçon de code.

Dans cette étape de traçabilité S2, le partitionnement est effectué par rapport à l'aspect fonctionnel et à l'aspect structurel.

L'approche de l'invention consiste à rechercher la couverture des classes d'équivalence. La preuve de la couverture des branches de code est alors apportée par la preuve de la couverture des classes d'équivalence.

Les classes d'équivalence sont donc construites de façon à pouvoir déterminer la couverture fonctionnelle, à savoir, la couverture des fonctionnalités du code, et la couverture structurelle, à savoir, la couverture de la structure du code. L'algorithme S20 produit donc des classes d'équivalence CE correspondant à ces deux besoins.

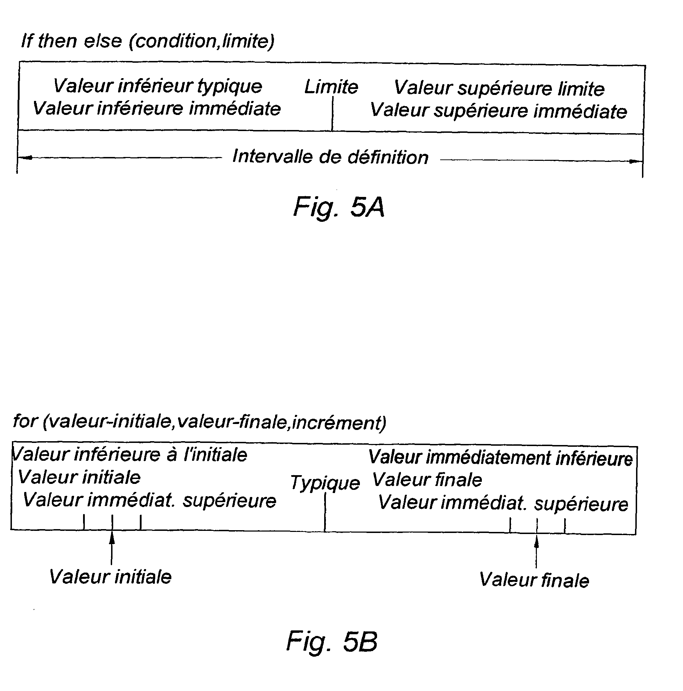

Avec l'algorithme de génération de code S10 selon l'invention, les blocs de code terminaux BT ne contiennent que du code séquentiel. Par conséquent, 1 lors de l'activation de chaque bloc de code, toutes les branches sont couvertes. L'algorithme de traçabilité S20 effectue un couplage entre les valeurs des variables et les sorties, chaque sortie étant identifiée à un bloc terminal, et les classes d'équivalence sont construites sur la base de ce couplage. De plus, comme montré aux Figs.5A et 5B, pour chaque structure de contrôle, il est défini les différents domaines de valeurs pour les variables internes du logiciel. La couverture du code est définie à partir des classes d'équivalence pour chaque construction standard de contrôle du code source.

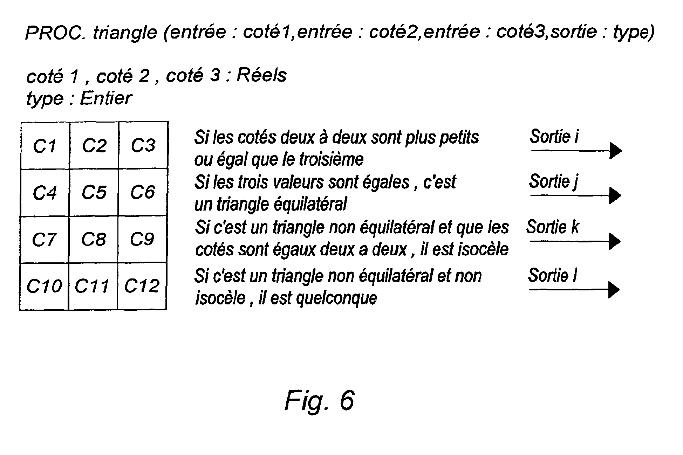

La Fig.6 illustre un exemple de construction de classes d'équivalence pour une procédure de détermination de caractéristiques de triangles. Les classes d'équivalence sont formées par le produit cartésien des variables d'entrée et des conditions de sortie (triangle isocèle, triangle équilatéral, etc.). Les variables d'entrée sont les longueurs des 3 côtés (côté 1, côté 2, côté 3) d'un triangle. Dans cet exemple, il y a 3 variables d'entrée et 4 conditions de sortie. Par conséquent, on obtient 12 classes d'équivalence (C1, C2, C3; C4, C5, C6; etc.).

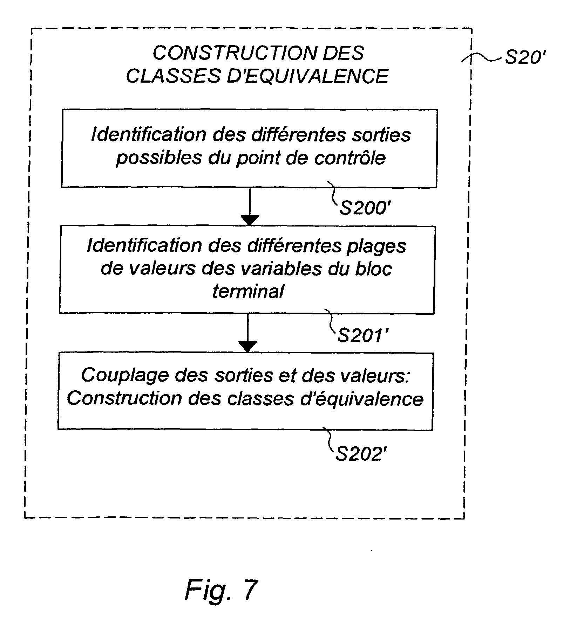

La Fig.7 montre un bloc caractéristique S20' de l'algorithme de traçabilité S20 selon l'invention. Le bloc S20' est relatif à la construction des classes d'équivalence CE et comprend une étape S200', une étape S201' et une étape S202'.

L'étape S200' identifie les différentes sorties possibles du point de contrôle. L'étape S201' fait suite à l'étape S200' et a pour objet d'identifier différentes plages de valeurs des variables du bloc de code terminal considéré. Les étapes S200' et S201' étant effectuées, l'étape S202' couple les sorties et les valeurs afin de construire les classes d'équivalence.

Conformément à la présente invention, chaque bloc de code terminal BT est caractérisé par une structure de contrôle, un ensemble de variables et un ensemble de sorties produites. Le principe consiste à coupler les variables de telle manière à avoir toutes les combinaisons possibles de valeurs pour obtenir une sortie donnée.

L'algorithme de traçabilité S20 selon l'invention est applicable à tout code source, du moment qu'il est associé à une analyse de couplage par les données pour généraliser la construction des classes d'équivalence. Le principe est d'appliquer, par une analyse du code produit, les règles d'instanciation des classes d'équivalence afin d'associer aux paramètres en entrée de la fonction les classes d'équivalence applicables à chacune des sorties du logiciel.

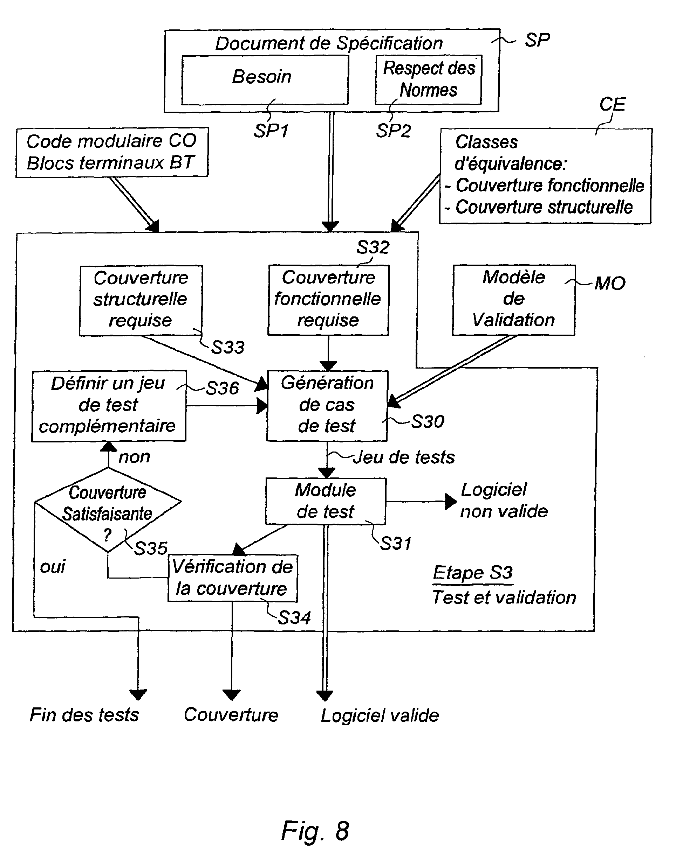

En référence aux Figs.8, 9 et 10, il est maintenant décrit plus particulièrement l'étape de test et validation S3.

Comme montré à la Fig.8, l'étape de test et validation S3 fait appel, entre autres, au modèle de validation MO, à un algorithme de génération de cas de test S30, et à un module de test S31.

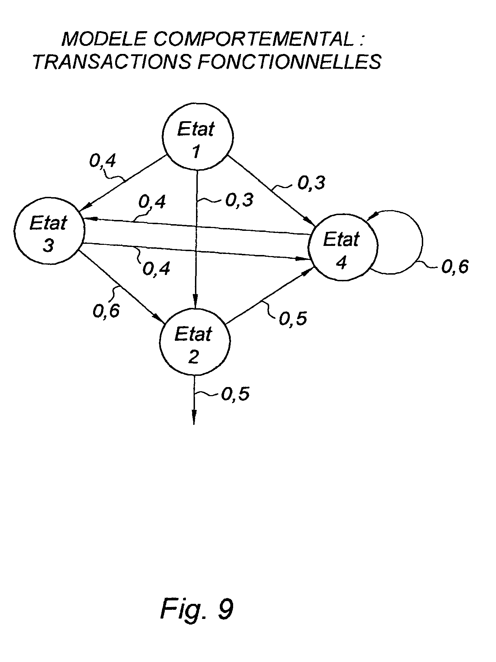

Le modèle comportemental de validation MO est, comme indiqué ci-dessus, construit à partir du document de spécification SP. Par exemple, conformément à la présente invention, le modèle de validation MO peut se présenter sous la forme d'un graphe probabilisé constitué d'une chaîne de Markov. La Fig.9 montre un exemple d'un modèle de ce type. Dans un tel modèle comportemental, on passe d'un état à un autre en fonction de probabilités associées aux transitions. Chaque transition d'un état à un autre correspond à une transaction fonctionnelle.

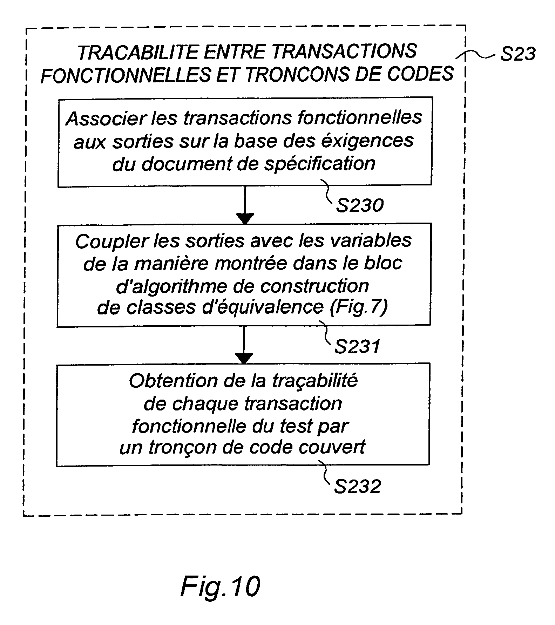

La correspondance entre les transactions fonctionnelles et les tronçons de code pour la couverture structurelle est réalisée à l'aide d'un algorithme de traçabilité entre transactions fonctionnelles et tronçons de code S23 montré à la Fig.10. Cet algorithme S23 peut être implanté au niveau de l'étape de traçabilité S2 afin de produire les tables de traçabilité TT correspondantes.

Comme montré à la Fig.10, l'algorithme de traçabilité entre transactions fonctionnelles et tronçons de code S23 comprend les étapes S230, S231 et S232.

L'étape S230 consiste à associer les transactions fonctionnelles du modèle de validation MO aux sorties sur la base du document de spécification. L'étape suivante S231 couple les sorties avec les variables de la manière montrée dans le bloc d'algorithme S20' de construction des classes d'équivalence. L'étape S232 vient après l'étape S231 et permet d'obtenir la traçabilité de chaque transaction ou exigence fonctionnelle du test par un tronçon de code couvert.

Des classes d'équivalence associées aux paramètres en sorties sont alors associées aux transitions d'activation des fonctions du système, en terme d'attribut. A chaque fois qu'une transaction sera entreprise, il sera alors possible d'associer le parcours de la transaction à l'ensemble des branches de code activées, par l'intermédiaire des tables de traçabilité entre les classes d'équivalence et les tronçons de code générés.

Comme montré à la Fig.8, il est donc possible, grâce à la propriété ci-dessus, de vérifier à posteriori la couverture structurelle S34 d'un jeu de tests, après l'exécution de ce jeu de tests. De plus, lorsque à la fin de tests fonctionnels, la couverture n'est pas satisfaisante S35, un jeu de tests complémentaire peut être défini S36 afin d'améliorer la couverture des tests. Le jeu de tests peut ainsi être optimisé pour obtenir une couverture fonctionnelle requise S32 et une couverture structurelle requise S33, relativement à une norme à respecter.

La réalisation d'un équipement de production de logiciel pour la mise en oeuvre du procédé selon l'invention est dans la compétence des hommes du métier et ne sera pas décrite ici de manière détaillée. L'équipement de production de logiciel selon l'invention est implanté matériellement dans un ordinateur et peut se présenter sous la forme d'une plate-forme de développement de logiciel exécutant les algorithmes de l'invention, et intégrant également des outils d'aide classiques. Par ailleurs, les fonctionnalités de l'équipement de production de logiciel selon l'invention peuvent être réparties et implantées partiellement dans différents outils intégrés ou pas dans la plate-forme, par exemple: des outils d'assistance à la génération de code; des analyseurs statiques de code; des générateurs de plans de test garantissant la traçabilité entre les exigences fonctionnelles, les exigences structurelles et les exigences de certification du logiciel; et des optimiseurs de code en compilation.

Les modes de réalisation de l'invention décrits ci-dessus ont été présentés à titre d'exemple. Différentes variantes et modifications sont possibles et apparaîtront aux hommes du métier. Ces variantes et modifications sont incluses dans le champ d'application couvert par les revendications annexées.

## Revendications

1. Procédé pour produire de manière automatisée des logiciels autorisant des tests avec une maîtrise d'une couverture fonctionnelle et d'une couverture structurelle desdits logiciels par lesdits tests, comprenant:
une étape de génération de code (S1) pour générer des blocs de code (BT) à partir d'un document de spécification (SP) d'un logiciel à produire;
une étape de traçabilité (S2) dans laquelle un partitionnement est effectué et des classes d'équivalence (CE) sont construites; et
une étape de test et validation (S3) pour tester un logiciel produit (CO) comprenant lesdits blocs de code (BT), avec lesdites couvertures fonctionnelle et structurelle, et procéder à sa validation;
**caractérisé en ce que**
ladite étape de génération de code (S1) fait appel à un processus de raffinement (S10, S102) pour produire de manière récursive (S1025) lesdits blocs de code (BT) sur la base d'une analyse des différentes sorties possibles d'un bloc de code fonctionnel (S1020) et des conditions discriminantes (S1024) sur les fonctions identifiées (S1021), conditions nécessaires et suffisantes pour que le code soit une solution complète et minimale aux spécifications définies par le document de spécification (SP).

2. Procédé selon la revendication 1,
**caractérisé en ce que** ledit processus de raffinement (S102) comprend les étapes consistant à:
identifier (S1020) les différentes sorties possibles desdits blocs de code (BF);
identifier (S1021) des fonctions qui produisent lesdites différentes sorties possibles;
exprimer (S1022) lesdites fonctions identifiées sous la forme de boîtes noires;
limiter à un nombre prédéterminé (7) les sous-fonctions d'une fonction;
définir (S1024) un point de contrôle par une condition nécessaire et suffisante.

3. Procédé selon la revendication 2,
**caractérisé en ce que** ledit processus de raffinement (S102) comprend également l'étape consistant à:
placer (S1026) les conditions fortement discriminantes en premier et les disjonctions avant les conjonctions.

4. Procédé selon la revendications 2 ou 3,
**caractérisé en ce que** ledit nombre prédéterminé est égal à 7.

5. Procédé selon l'une quelconque des revendications 1 à 4,
**caractérisé en ce que**, dans ladite étape de traçabilité (S2), ledit partitionnement et ladite construction desdites classes d'équivalence (CE) sont effectués relativement à l'aspect fonctionnel et à l'aspect structurel.

6. Procédé selon la revendication 5,
**caractérisé en ce que** ladite étape de traçabilité (S2) comprend les étapes consistant à:
identifier (S200') les différentes plages de valeurs des variables desdits blocs de code (BT);
identifier (S201') les différentes sorties possibles d'un point de contrôle;
coupler (S202') lesdites différentes sorties et lesdites valeurs des variables; et
construire (S202') lesdites classes d'équivalence (CE) à partir dudit couplage desdites différentes sorties et desdites valeurs des variables.

7. Procédé selon l'une quelconque des revendications 1 à 6,
**caractérisé en ce que** ladite étape de test et validation (S3) fait appel à un modèle comportemental de validation (MO) pour générer des jeux de tests, et **en ce qu'**une traçabilité est déterminée entre des transactions fonctionnelles dudit modèle comportemental de validation (MO) et des portions desdits blocs de code (BT) activées par lesdites transactions fonctionnelles.

8. Procédé selon la revendication 7,
**caractérisé en ce que** ladite étape de test et validation (S3) comprend une vérification (S34) d'une couverture structurelle dudit logiciel par un jeu de tests, à la fin de l'exécution dudit jeu de tests.

9. Procédé selon la revendication 8,
dans lequel ladite étape de test et validation (S3) comprend une génération d'un jeu de tests supplémentaire (S36) lorsque ladite couverture vérifiée (S34) n'est pas satisfaisante.

10. Procédé selon l'une quelconque des revendications 7 à 9,
**caractérisé en ce que** ladite étape de test et validation (S3) comprend une génération d'un jeu de tests optimal pour une couverture fonctionnelle requise (S32) et une couverture structurelle requise (S33).

11. Equipement pour produire de manière automatisée des logiciels autorisant des tests avec une maîtrise d'une couverture fonctionnelle et d'une couverture structurelle desdits logiciels par lesdits tests, mettant en oeuvre le procédé selon l'une quelconque des revendications 1 à 10, comprenant:
des moyens (S1) pour générer des blocs de code (BT) à partir d'un document de spécification (SP) d'un logiciel à produire;
des moyens (S2) de traçabilité dans lesquels un partitionnement est effectué et des classes d'équivalence (CE) sont construites; et
des moyens (S3) pour tester un logiciel produit (CO) comprenant lesdits blocs de code (BT), avec lesdites couvertures fonctionnelle et structurelle, et procéder à sa validation;
**caractérisé en ce que**
lesdits moyens (S1) pour générer des blocs de code (BT) font appel à un processus de raffinement (S10, S102) pour produire de manière récursive (S1025) lesdits blocs de code (BT) sur la base d'une analyse des différentes sorties possibles d'un bloc fonctionnel (S1020) et des conditions discriminantes (S1024) sur les fonctions identifiées (S1021), conditions nécessaires et suffisantes pour que le code soit une solution complète et minimale aux spécifications définies par le document de spécification (SP).

12. Equipement selon la revendication 11,
**caractérisé en ce qu'**il est implanté dans un outil d'assistance à la génération de code.

13. Equipement selon la revendication 11 ou 12,
**caractérisé en ce qu'**il est implanté dans un analyseur statique de code.

14. Equipement selon l'une quelconque des revendications 11 à 13,
**caractérisé en ce qu'**il est implanté dans un générateur de plans de test garantissant une traçabilité entre des exigences fonctionnelles, des exigences structurelles et des exigences de certification du logiciel.

15. Equipement selon l'une quelconque des revendications 11 à 14,
**caractérisé en ce qu'**il est implanté dans un optimiseur de code en compilation.

## Claims

1. Method for automated production of software permitting tests with control of a functional coverage and a structural coverage of said software by said tests, comprising:
a code generation step (S1) for generating code blocks (BT) from a specification document (SP) for software to be produced;
a traceability step (S2) in which partitioning is carried out and equivalence classes (CE) are constructed; and
a test and validation step (S3) for testing produced software (CO) comprising said code blocks (BT), with said functional and structural coverages, and carrying out its validation;
**characterised in that**
said code generation step (S1) calls upon a refinement process (S10, S102) for recursively producing (S1025) said code blocks (BT) on the basis of an analysis of the different possible outputs of a functional code block (S1020) and discriminant conditions (S1024) on the identified functions (S1021), necessary and sufficient conditions for the code to be a complete and minimum solution to the specifications defined by the specification document (SP).

2. Method according to Claim 1,
**characterised in that** said refinement process (S102) comprises the steps consisting of:
identifying (S1020) the different possible outputs of said code blocks (BF);
identifying (S1021) functions that produce said different possible outputs;
expressing (S1022) said identified functions in the form of black boxes;
limiting (S1023) to a predetermined number (7) the subfunctions of a function;
defining (S1024) a check point by a necessary and sufficient condition.

3. Method according to Claim 2,
**characterised in that** said refinement process (S102) also comprises the step consisting of:
placing (S1026) the highly discriminant conditions first and the disjunctions before the conjunctions.

4. Method according to Claim 2 or 3,
**characterised in that** said predetermined number is equal to 7.

5. Method according to any one of Claims 1 to 4,
**characterised in that**, in said traceability step (S2), said partitioning and said construction of said equivalence classes (CE) are carried out in relation to the functional aspect and the structural aspect.

6. Method according to Claim 5,
**characterised in that** said traceability step (S2) comprises the steps consisting of:
identifying (S200') the different ranges of values of the variables of said code blocks (BT);
identifying (S201') the different possible outputs of a check point;
coupling (S202') said different outputs and said values of variables; and
constructing (S202') said equivalence classes (CE) from said coupling of said different outputs and said values of variables.

7. Method according to any one of Claims 1 to 6,
**characterised in that** said test and validation step (S3) calls upon a behavioural validation model (MO) for generating sets of tests, and **in that** a traceability is determined between functional transactions of said behavioural validation model (MO) and portions of said code blocks (BT) activated by said functional transactions.

8. Method according to Claim 7,
**characterised in that** said test and validation step (S3) comprises verification (S34) of a structural coverage of said software by a set of tests, at the end of execution of said set of tests.

9. Method according to Claim 8,
in which said test and validation step (S3) comprises generation of an additional set of tests (S36) when said verified coverage (S34) is not satisfactory.

10. Method according to any one of Claims 7 to 9,
**characterised in that** said test and validation step (S3) comprises generation of an optimum set of tests for a required functional coverage (S32) and a required structural coverage (S33).

11. System for automated production of software permitting tests with control of a functional coverage and a structural coverage of said software by said tests, implementing the method according to any one of Claims 1 to 10, comprising:
means (S1) for generating code blocks (BT) from a specification document (SP) for software to be produced;
traceability means (S2) in which partitioning is carried out and equivalence classes (CE) are constructed; and
means (S3) for testing produced software (CO) comprising said code blocks (BT), with said functional and structural coverages, and carrying out its validation;
**characterised in that**
said means (S1) for generating code blocks (-BT) call upon a refinement process (S10, S102) for recursively producing (S1025) said code blocks (BT) on the basis of an analysis of the different possible outputs of a functional block (S1020) and discriminant conditions (S1024) on the identified functions (S1021), necessary and sufficient conditions for the code to be a complete and minimum solution to the specifications defined by the specification document (SP).

12. System according to Claim 11,
**characterised in that** it is installed in a code generation help tool.

13. System according to Claim 11 or 12,
**characterised in that** it is installed in a static code analyser.

14. System according to any one of Claims 11 to 13,
**characterised in that** it is installed in a test plan generator guaranteeing traceability between functional requirements, structural requirements and certification requirements of the software.

15. System according to any one of Claims 11 to 14,
**characterised in that** it is installed in a code compilation optimiser.

## Patentansprüche

1. Verfahren zur automatisierten Erzeugung von Rechnerprogrammen, die Tests mit Beherrschung einer funktionellen Abdeckung und einer strukturellen Abdeckung der Rechnerprogramme durch die Tests erlauben, das eine Codegenerierungsphase (S1) zur Generierung von Codeblöcken (BT) ausgehend von einer Spezifikationsschrift (SP) eines zu erzeugenden Rechnerprogramms, eine Rückverfolgungsphase (S2), in der eine Partitionierung vorgenommen wird und Äquivalenzklassen (CE) gebildet werden, und eine Test- und Validierungsphase (S3) zum Testen eines erzeugten Rechnerprogramms (CO), das die Codeblöcke (BT) umfasst, mit der funktionellen und strukturellen Abdeckung, und zur Vornahme seiner Validierung umfasst, **dadurch gekennzeichnet, dass** die Codegenerierungsphase (S1) auf einen Verfeinerungsprozess (S10, S102) zurückgreift, um die Codeblöcke (BT) auf der Grundlage einer Analyse der verschiedenen möglichen Ausgabegrößen eines funktionellen Codeblocks (S1020) und der unterscheidenden Bedingungen (S1024) für die ermittelten Funktionen (S1021) rekursiv zu generieren, wobei die unterscheidenden Bedingungen notwendig und hinreichend sind, damit der Code eine vollständige Mindestlösung für die in der Spezifikationsschrift (SP) festgelegten Spezifikationen ist.

2. Verfahren nach Anspruch 1, **dadurch gekennzeichnet, dass** der Verfeinerungsprozess (S102) die Phasen umfasst, die in Folgendem bestehen:
Ermitteln (S1020) der Funktionen, die die verschiedenen möglichen Ausgabegrößen der Codeblöcke (BT) erzeugen;
Ermitteln (S1021) der Funktionen, die die verschiedenen möglichen Ausgabegrößen erzeugen;
Ausdrücken (S1022) der ermittelten Funktionen in Form von Black Boxes;
Begrenzen (S1023) der Unterfunktionen einer Funktion auf eine vorbestimmte Anzahl (7);
Definieren (S1024) eines Kontrollpunktes durch eine notwendige und hinreichende Bedingung.

3. Verfahren nach Anspruch 2, **dadurch gekennzeichnet, dass** der Verfeinerungsprozess (S102) auch die Phase umfasst, die in Folgendem besteht:
Setzen (S1026) der stark unterscheidenden Bedingungen an die erste Stelle und der Disjunktionen vor die Konjunktionen.

4. Verfahren nach Anspruch 2 oder 3, **dadurch gekennzeichnet, dass** die vorbestimmte Anzahl 7 beträgt.

5. Verfahren nach einem der Ansprüche 1 bis 4, **dadurch gekennzeichnet, dass** die Rückverfolgungsphase (S2), die Partitionierung und die Bildung der Äquivalenzklassen (CE) im Verhältnis zu dem funktionellen und zu dem strukturellen Aspekt durchgeführt werden.

6. Verfahren nach Anspruch 5, **dadurch gekennzeichnet, dass** die Rückverfolgungsphase (S2) die Phasen umfasst, die in Folgendem bestehen:
Ermitteln (S200') der verschiedenen Wertebereiche der Variablen der Codeblöcke (BT);
Ermitteln (S201') der verschiedenen möglichen Ausgabegrößen eines Kontrollpunktes;
Koppeln (S202') der verschiedenen Ausgabegrößen und der Werte der Variablen; und
Bilden (S202') der Äquivalenzklassen (CE) ausgehend von der Kopplung der verschiedenen Ausgabegrößen und der Werte der Variablen.

7. Verfahren nach einem der Ansprüche 1 bis 6, **dadurch gekennzeichnet, dass** die Test- und Validierungsphase (S3) auf ein Verhaltensmodell zur Validierung (MO) zurückgreift, um Testfälle zu erzeugen, und dass eine Rückverfolgbarkeit zwischen den funktionellen Transaktionen des Verhaltensmodells zur Validierung (MO) und Teilen der Codeblöcke (BT), die von den funktionellen Transaktionen aktiviert werden, bestimmt wird.

8. Verfahren nach Anspruch 7, **dadurch gekennzeichnet, dass** die Test- und Validerungsphase (S3) eine Verifizierung (S34) einer strukturellen Abdeckung des Rechnerprogramms durch einen Testfall umfasst, um den Testfall ausführen zu können.

9. Verfahren nach Anspruch 8, in dem die Test- und Validerungsphase (S3) eine Erzeugung eines zusätzlichen Testfalles (S36) umfasst, wenn die verifizierte Abdeckung (S34) nicht zufrieden stellend ist.

10. Verfahren nach einem der Ansprüche 7 bis 9, **dadurch gekennzeichnet, dass** die Test- und Validerungsphase (S3) eine Erzeugung eines optimalen Testfalles für eine geforderte funktionelle Abdeckung (S32) und eine geforderte strukturelle Abdeckung (S33) umfasst.

11. Gerät zur automatisierten Erzeugung von Rechnerprogrammen, das Tests mit Beherrschung einer funktionellen Abdeckung und einer strukturellen Abdeckung der Rechnerprogramme durch die Tests erlaubt, indem es das Verfahren nach einem der Ansprüche 1 bis 10 einsetzt, und die Mittel (S1) zur Generierung von Codeblöcken (BT) ausgehend von einer Spezifikationsschrift (SP) eines zu erzeugenden Rechnerprogramms, Rückverfolgungsmittel (S2), in denen eine Partitionierung vorgenommen wird und Äquivalenzklassen (CE) gebildet werden, und Mittel (S3) zum Testen eines erzeugten Rechnerprogramms (CO), das die Codeblöcke (BT) umfasst, mit der funktionellen und strukturellen Abdeckung, und zur Vornahme seiner Validierung umfasst, **dadurch gekennzeichnet, dass** die Mittel (S1) zur Generierung der Codeblöcke (BT) auf einen Verfeinerungsprozess (S10, S102) zurückgreifen, um die Codeblöcke (BT) auf der Grundlage einer Analyse der verschiedenen möglichen Ausgabegrößen eines funktionellen Codeblocks (S1020) und der unterscheidenden Bedingungen (S1024) für die ermittelten Funktionen (S1021) rekursiv zu generieren, wobei die unterscheidenden Bedingungen notwendig und ausreichend sind, damit der Code eine vollständige Mindestlösung für die in der Spezifikationsschrift (SP) festgelegten Spezifikationen ist.

12. Gerät nach Anspruch 11, **dadurch gekennzeichnet, dass** es in ein Hilfsmittel zur Unterstützung der Codegenerierung eingebaut ist.

13. Gerät nach Anspruch 11 oder 12, **dadurch gekennzeichnet, dass** es in einen statischen Codeanalysator eingebaut ist.

14. Gerät nach einem der Ansprüche 11 bis 13, **dadurch gekennzeichnet, dass** es in einen Testplangenerator eingebaut ist, der eine Rückverfolgbarkeit zwischen den funktionellen Anforderungen, den strukturellen Anforderungen und den Anforderungen an die Zertifizierung des Rechnerprogramms gewährleistet.

15. Gerät nach einem der Ansprüche 11 bis 14, **dadurch gekennzeichnet, dass** es in einen Optimierer für den übersetzten Code eingebaut ist.
